# EUROPEAN PATENT SPECIFICATION

(11) **EP 3 399 393 B1**
(45) Date of publication and mention of the grant of the patent: **05.08.2020**
(21) Application number: 16881546.2
(22) Date of filing: 14.11.2016
(51) Int. Cl.: G06F 3/041, G06F 3/044

(54) **INPUT DEVICE**
EINGABEVORRICHTUNG
DISPOSITIF D'ENTRÉE

(30) Priority: 28.12.2015 JP 2015255983
(43) Date of publication of application: 07.11.2018
(73) Proprietor: Alps Alpine Co., Ltd., Tokyo 145-8501 (JP)
(72) Inventor: ITO, Takayuki, Tokyo 145-8501 (JP); TABATA, Masashi, Tokyo 145-8501 (JP); ANZAI, Ayumu, Tokyo 145-8501 (JP)
(74) Representative: Schmitt-Nilson Schraud Waibel Wohlfrom Patentanwälte Partnerschaft mbB
(86) International application number: PCT/JP2016/083635
(87) International publication number: WO 2017/115566

(56) References cited:
- JP-A- 2012 043 298
- JP-A- 2014 154 088
- JP-A- 2015 011 492
- JP-A- 2016 173 737
- US-A1- 2011 018 560
- US-A1- 2013 335 345
- US-A1- 2014 204 286
- US-A1- 2015 009 422
- US-A1- 2015 268 795
- DATABASE WPI Week 201525 Thomson Scientific, London, GB; AN 2015-23104C XP002785869, -& TW M 493 070 U (CHENHONG PHOTOELECTRIC SCI & TECHNOLOGY) 1 January 2015 (2015-01-01)

## Description

### BACKGROUND OF THE INVENTION

### 1. Field of the Invention

The present invention relates to an input device that includes transparent electrodes and a decorative area, and, in particular, relates to an input device that includes a wiring unit in the decorative area.

### 2. Description of the Related Art

In recent years, a touch panel type input device has been developed as the input device. Touch panel type input devices are popular and mainly used as a mobile device. In the touch panel type input devices, an operation input is detected according to a contact of an operation body on an operation surface of the mobile device, or according to a change of capacitance when the operation body comes close to the operation surface.

As one of the touch panel type input devices, an input device 900 described in Patent Document 1 is known. In the following, referring to Fig. 12 and Fig. 13, the input device 900 will be described.

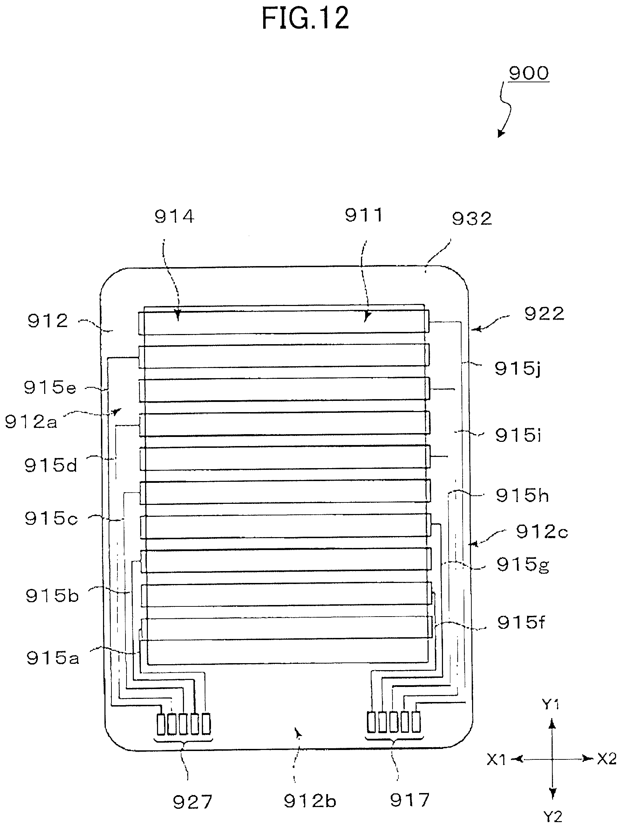

As illustrated in Fig. 12, the input device 900 includes an input area 911 on a lower transparent substrate 932 of a lower substrate 922, and the input area 911 is surrounded by a frame-shaped decorative area 912. Here, the "decorative area" refers to an area used for preventing an area of the lower substrate 922 illustrated in Fig. 12 from being seen from the operation surface side of the touch panel. The decorative area 912 is an area decorated (black-painted) by a decorative layer 934 included in the decorative area 912. Further, practically, the decorative area 912 is a "non-input area" that is an area not used as an operation surface.

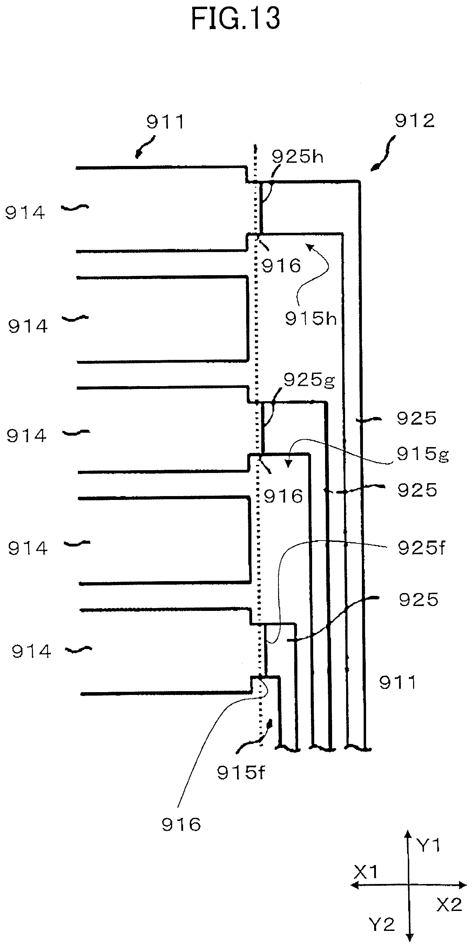

As illustrated in Fig. 12 and Fig. 13, the input device 900 includes transparent electrodes 914 and wiring units 915 (915a-915j) that are electrically connected to the transparent electrodes 914. The wiring units 915 have a layer structure including a first wiring layer 916 and a second wiring layer 925 (925f-925h). The first wiring layer 916 is a transparent conductive layer that is integrated with the transparent electrodes 914 that are formed on the surface of the transparent substrate. The second wiring layer 925 is formed by a metal layer. The transparent electrodes 914 are included in the input area 911, and the second wiring layer 925 is included in the decorative area 912 that is located outside the input area 911. Further, the first wiring layer 916 is provided extending into both the input area 911 and the decorative area 912.

The input device 900 provides an effect of reducing the electric resistance of the wiring unit by forming the second wiring layer 925 as a metal wiring unit on the first wiring layer 916 as a transparent wiring unit.

### [Citation List]

### [Patent Document]

[Patent Document 1] Japanese Unexamined Patent Application Publication No. 2012-043298

US 2013/335345 A1 discloses a touch display device which includes a transparent substrate, a light-blocking frame layer and a transparent protecting layer. The transparent substrate includes a frame area and a visual area. The light-blocking frame layer is disposed above the frame area of the transparent substrate. The transparent protecting layer is disposed above the transparent substrate and the light-blocking frame layer, and includes a gap having a projection on the transparent substrate.

US 2010/018560 A1 discloses an electrostatic capacitance input device including an input region of a substrate, in which a plurality of input position detection electrodes are provided, a plurality of wires that are electrically connected to the plurality of input position detection electrodes and extend outside the input region of the substrate, and a shield electrode that overlaps the wires on the input operation side.

US 2015/009422 A1 discloses a touch panel and a method for manufacturing the same. The method includes forming a light-shielding conductive patterned layer on a transparent substrate, which includes a light-shielding wire, a first contact pad and a first bridging electrode. An insulating layer is formed on the first bridging electrode, the first contact pad and the transparent substrate. First and second openings are formed in the insulating layer to respectively expose a portion of the first bridging electrode and a portion of the first contact pad.

US 2015/268795 A1 discloses a sensor-equipped display device which includes a display panel, first driver, and second driver. The display panel includes a common electrode, a pixel electrode, a detection electrode, a connection line and lead line. The first driver supplies a common driving signal to the common electrode during a display drive time and supplies a sensor driving signal to the common electrode during a sensing drive time. The second driver detects a sensor output value during the sensing drive time.

US 2014/204286 A1 discloses a touch screen panel which includes a window substrate divided into an active area and a non-active area, the non-active area being outside the active area, the window substrate having a first printed layer formed in the non-active area, a touch substrate including sensing electrodes formed in the active area and having a second printed layer that faces the first printed layer formed in the non-active area, and an adhesive layer interposed between the window substrate and the touch substrate.

However, in the input device 900, although the metal wiring unit cannot be seen due to the decorative layer included in the decorative area when the operation surface side of the touch panel is viewed from a direction orthogonal to the transparent substrate, the metal wiring unit can be seen when viewed from a direction oblique to the transparent substrate. Hence, there is a problem of bad appearance. This problem is worsened in particular when the touch panel is mounted on the center console of a vehicle. In the case where the touch panel is mounted on the center console of a vehicle, a driver and a passenger in the passenger seat, who are main operators of the touch panel, look at the operation surface always from a direction oblique to the transparent substrate, and thus, the metal wiring unit included in the decorative area can be seen by the operators.

The present invention has been made in view of the above. An object of the present invention is to provide an input device in which the metal wiring unit cannot be readily seen from the operation surface side.

### [SOLUTION TO PROBLEM]

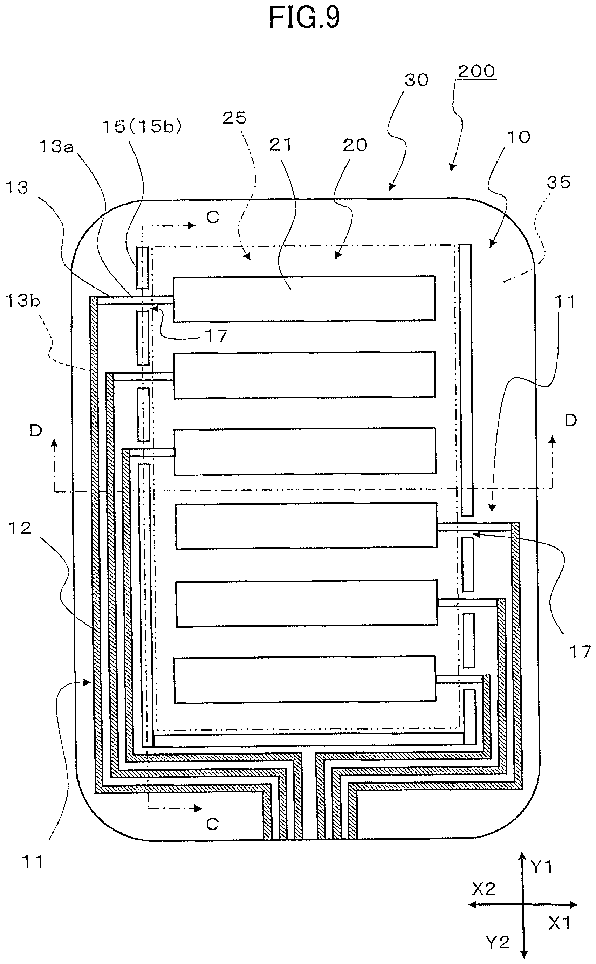

The present invention relates to an input device according to the appended claims. The subject-matter described in page 6, lines 5-13 and shown in Fig. 9-11 does not form part of the invention.

### [ADVANTAGEOUS EFFECTS OF INVENTION]

In the input device according to an embodiment of the present invention, the level parts are provided on the display area side with respect to the metal wiring unit. As a result, it is possible to cause the light traveling towards the metal wiring unit to be refracted by the level parts, and it is possible to prevent the light from being readily emitted onto the metal wiring unit. Therefore, it is possible to prevent the metal wiring unit from being readily seen from the operation surface side.

### BRIEF DESCRIPTION OF THE DRAWINGS

Fig. 1 is a plan view illustrating an input device according to a first embodiment of the present invention.
Fig. 2 is a sectional view of an input device according to the first embodiment.
Fig. 3 is an enlarged sectional view of an input device according to the first embodiment.
Fig. 4 is a plan view of an input device according to a first modified example of the first embodiment.
Fig. 5 is an enlarged plan view of an input device according to a second modified example of the first embodiment.
Fig. 6 is an enlarged plan view of an input device according to a third modified example of the first embodiment.
Fig. 7 is a plan view of an input device according to a fourth modified example of the first embodiment.
Fig. 8 is an enlarged sectional view of an input device according to a fifth modified example of the first embodiment.
Fig. 9 is a plan view of an input device according to an example.
Fig. 10 is a sectional view of an input device according to an example.
Fig. 11 is an enlarged sectional view of an input device according to an example.
Fig. 12 is a plan view illustrating an input device according to a conventional example.
Fig. 13 is an enlarged plan view illustrating an input device according to a conventional example.

### DETAILED DESCRIPTION OF THE PREFERRED EMBODIMENTS

In the following, an input device according to an embodiment of the present invention will be described while making reference to the drawings. The input device according to an embodiment of the present invention is an input device, installed in the center console of a vehicle, or the like, used for operating, for example, a car-navigation device, an air conditioner, a device related to drive operations, etc., and is an input device in which a capacitance type touch panel is used. The use of the input device according to an embodiment of the present invention is not limited to the above, and various modifications may be made. It should be noted that, in the present specification, unless otherwise noted in particular, the X1 side of each drawing is referred to as a "right side", the X2 side is referred to as a "left side", the Y1 side is referred to as a "back side", the Y2 side is referred to as a "front side", the Z1 side is referred to as an "upper side", and the Z2 side is referred to as a "lower side".

### [First embodiment]

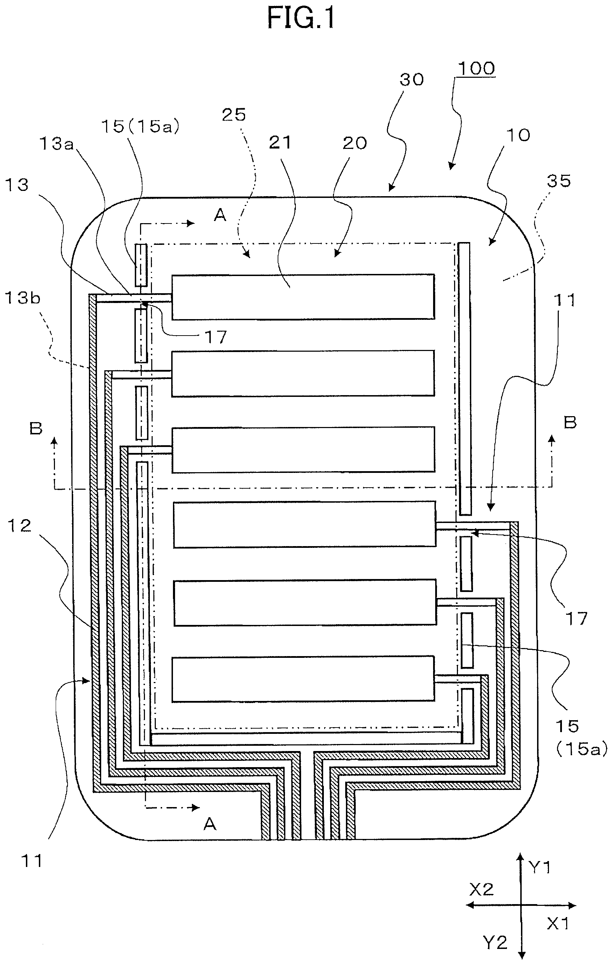

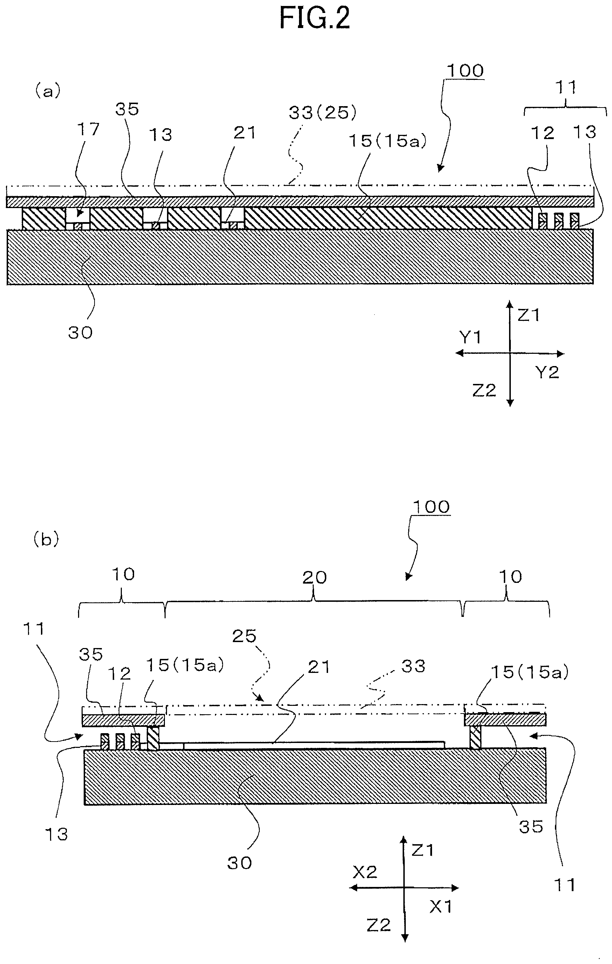

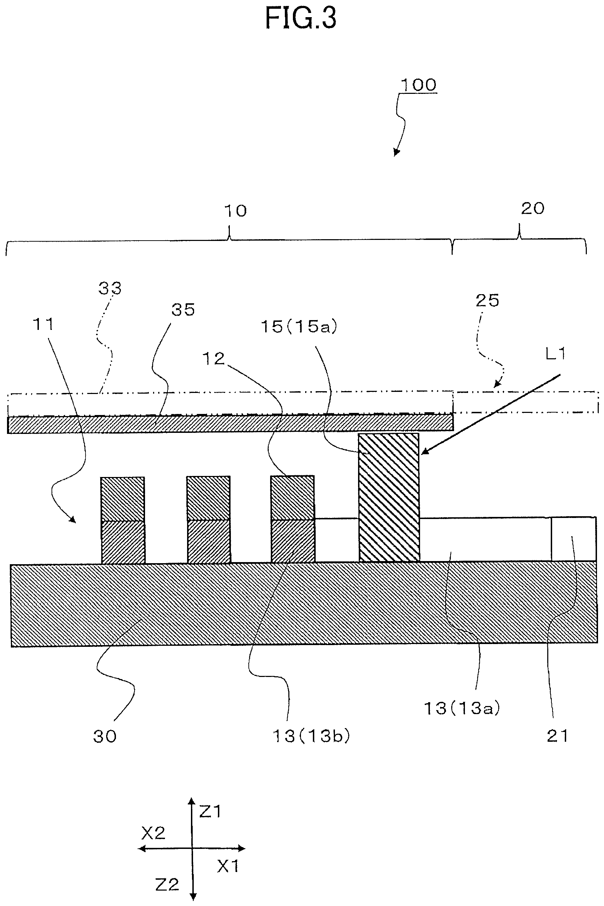

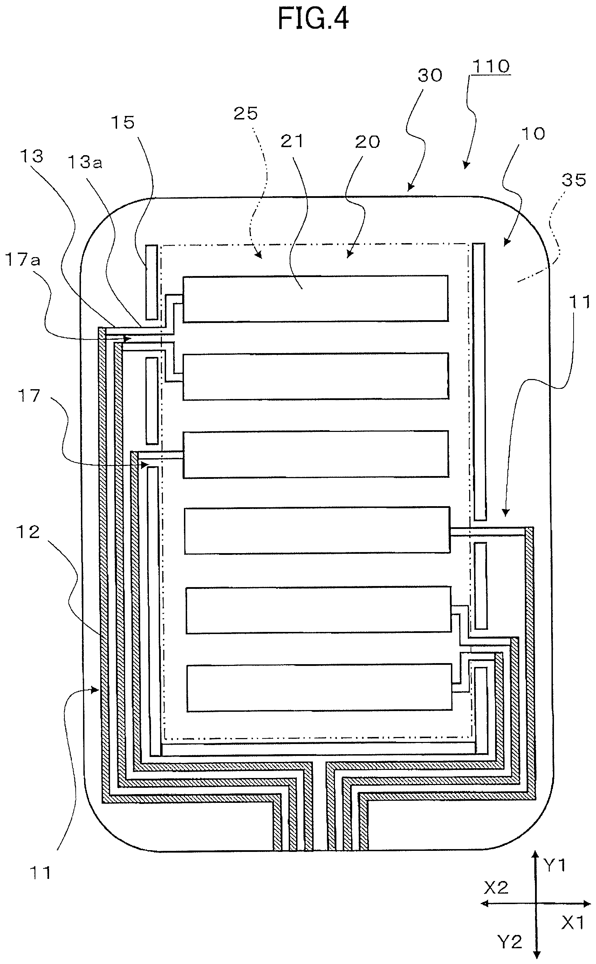

First, referring to Fig. 1 through Fig. 3, a structure of an input device 100 according to a first embodiment of the present invention will be described. Fig. 1 is a plan view illustrating the input device 100 according to the first embodiment, and Fig. 2 is a sectional view of the input device 100 according to the first embodiment. In Fig. 2, Fig. 2(a) is a sectional view viewed from an A-A line illustrated in Fig. 1 towards the right direction, and Fig. 2(b) is a sectional view viewed from a B-B line illustrated in Fig. 1 towards the back direction. Fig. 3 is an enlarged sectional view of a part of the input device 100 according to the first embodiment, viewed from the B-B line illustrated in Fig. 1 towards the back direction. It should be noted that, in order to clearly distinguish between a metal wiring unit 12 and transparent connection wiring units 13a in Fig. 1 (plan view), hatching is applied to the metal wiring unit 12. The same is applied to Fig. 4 through Fig. 7 and Fig. 9 described below. Further, in each drawing, a surface member 33 and an operation surface 25 above a transparent substrate 30 are indicated by a two-dot chain line.

As illustrated in Fig. 1, the input device 100 includes: the transparent substrate 30 including a display area 20 and a decorative area 10 on the surface; transparent electrodes 21 included in the display area 20; and a wiring unit 11 included in the decorative area 10.

The transparent substrate 30 is formed in substantially a rectangular shape by a film-shaped transparent substrate made of polyethylene terephthalate (PET), or the like, with transparency, a glass substrate, etc.

The display area 20 is an input area in the input device 100. A plurality of the transparent electrodes 21 are formed on the surface of the display area 20. The transparent electrodes 21 are an electrode pattern formed by causing transparent conductive material such as ITO (Indium Tin Oxide) to be directly applied to the surface of the transparent substrate 30 according to the vapor deposition, and by causing the transparent conductive material to be etched. Therefore, the display area 20 has transparency with respect to an up-and-down direction (thickness direction). It should be noted that it is not necessary that the transparent electrodes 21 are directly formed on the surface of the transparent substrate 30, and the transparent electrodes 21 may be formed by causing a film-shaped substrate, on which transparent conductive material such as ITO has already been applied according to the vapor deposition and the electrodes have already been formed, to be attached to the surface of the transparent substrate 30 via a transparent adhesive. An operation surface for operating the input device 100 is provided on the upper side of the display area 20.

The decorative area 10 is a frame-shaped area surrounding the display area 20 on the transparent substrate 30. The wiring unit 11 is formed in the decorative area 10. The decorative area 10 is an area used for preventing the wiring unit 11 included in the decorative area 10 from being seen from the operation surface 25 side of the touch panel installed in the center console of a vehicle, or the like. The decorative area 10 is a non-input area that is practically not used for input.

The wiring unit 11, which is formed in the decorative area 10, includes a transparent conductive layer of a plurality of transparent wiring units 13, and includes a plurality of metal wiring units 12 corresponding to the transparent wiring units 13. The transparent wiring units 13 extend from the transparent electrodes 21 on the display area 20, and are formed integrally with the transparent electrodes 21.

As illustrated in Fig. 1, the transparent wiring units 13 includes transparent connection wiring units 13a, via which the transparent electrodes 21 on the display area 20 and the metal wiring units 12 are electrically connected. The transparent wiring units 13 also includes transparent lower-side wiring units 13b that are provided on the lower side of the metal wiring units 12. In other words, in the transparent wiring units 13, the metal wiring units 12 are layered on the transparent lower-side wiring units 13b that are located along the right side and the left side of the rectangular-shaped transparent substrate 30 as illustrated in Fig. 3.

The transparent wiring units 13 are formed extending from the transparent electrodes 21. As a result, as is the case with the transparent electrodes 21, the transparent wiring units 13 are made of transparent conductive material such as ITO. With respect to the above, the metal wiring units 12 are made of metal material, such as Cu, Cu alloy, CuNi alloy, Ni, Ag, etc., whose electrical resistance value is less than the electrical resistance value of the transparent conductive material used for the transparent wiring units 13. It is possible to maintain low electrical resistance of the wiring unit 11 by forming the above-described metal wiring units 12 on the upper side of the transparent lower-side wiring units 13b.

As illustrated in Fig. 2(a), Fig. 2(b), and Fig. 3, the surface member 33 including the operation surface 25 in the center is connected above the transparent electrodes 21 and the wiring unit 11 via an adhesive layer such as a double-sided adhesive tape (not shown). The material of the surface member 33 is not limited to a particular material. The surface member 33 is made of glass, transparent plastic, etc. Further, the adhesive layer is also made of a transparent material.

In a capacitance type input device like the input device 100, when a finger touches or comes close to the operation surface 25 above the transparent electrodes 21 included in the display area 20 illustrated in Fig. 2(b), the capacitance between the finger and the transparent electrodes 21 is added to the capacitance between the transparent electrodes 21 and the ground, and the total capacitance is changed. Further, it is possible to calculate the contact point of the finger based on the change of the capacitance, and thus, it is determined that an input has been made.

As illustrated in Fig. 1, a frame-shaped decorative layer 35 is provided in the decorative area 10 of the transparent substrate 30 in accordance with the shape of the decorative area 10. As illustrated in Fig. 2(a), Fig. 2(b), and Fig. 3, the decorative layer 35 is formed between the decorative area 10 side of the surface member 33 and the wiring unit 11. The decorative layer 35 is formed by painting black the lower surface of the surface member 33. By forming the decorative layer 35 on the lower surface of the surface member 33, it becomes possible to display the decorative area as black, practically hiding the wiring unit 11 on the decorative area 10, when viewed from the operation surface 25 side of the touch panel. In other words, the decorative area 10 has non-transparency with respect to an up-and-down direction (thickness direction). It should be noted that the decorative layer 35 may be provided, not on the lower surface of the surface member 33, but on the lower surface of the transparent substrate 30 under the wiring unit 11.

As illustrated in Fig. 1, a plurality of level parts 15 are provided in the decorative area 10 on the display area 20 side with respect to the metal wiring units 12.

As illustrated in Fig. 1, the level parts 15 are formed in a direction from the front side to the back side (Y1-Y2 direction). Gaps 17 are provided between the adjacent level parts 15. Therefore, the level parts 15 are provided being separated from each other. In other words, the level parts 15 are provided in a direction, in which the metal wiring units 12 extend in a plan view, so as to create the gaps 17 between the adjacent level parts 15. Further, the above-described transparent connection units 13a extend from the display area 20 to the decorative area 10 through the gaps 17.

In an input device 100 according to the first embodiment of the present invention, the level parts 15 provided in the decorative area 10 are protrusions 15a provided on the transparent substrate 30 as illustrated in Fig. 2(a), Fig. 2(b), and Fig. 3. The protrusions 15a are molded together with the transparent substrate 30. Therefore, as is the case with the transparent substrate 30, the protrusions 15a are formed by a film-shaped transparent substrate made of polyethylene terephthalate, etc., with transparency, or by a glass substrate. As illustrated in Fig. 3, the height of the level parts 15a is set higher than the height of the metal wiring units 12 that are layered on the transparent wiring units 13.

By providing the level parts 15 in the decorative area 10 on the display area 20 side with respect to the metal wiring units 12, it is possible to prevent the metal wiring units 12 from being readily seen from the operation surface 25 side of the input device 100. The reason why it is possible to prevent the metal wiring units 12 from being readily seen from the operation surface 25 side of the input device 100 by providing the level parts 15 in the decorative area 10 will be described below.

As illustrated in Fig. 3, a light beam L1, which travels towards the metal wiring units 12 from the operation surface 25 side, before hitting the metal wiring units 12, hits the display area 20 side of the level parts 15 as the protrusions 15a that are made of a transparent substrate. Next, when entering the protrusions 15a, the light beam L1 is refracted due to the fact that the refractive index of the protrusions 15a made of a transparent substrate, a glass substrate, or the like, is greater than the refractive index of the air. Therefore, the light beam L1 does not travel towards the metal wiring units 12, and thus, it is possible to prevent the light beam L1 from readily hitting the metal wiring units 12. As a result, it is possible to prevent the metal wiring units 12 from being readily seen from the operation surface 25 side of the input device 100.

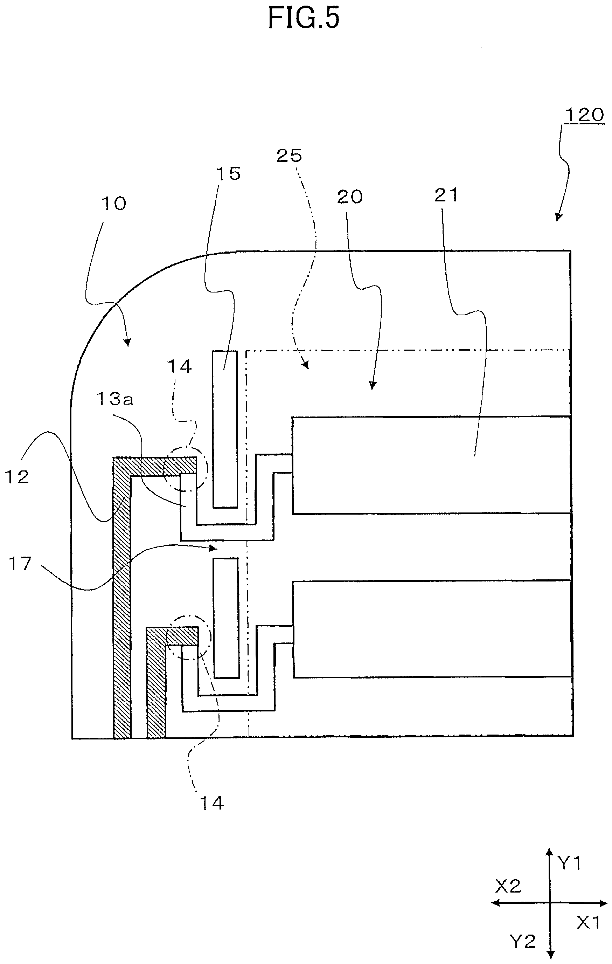

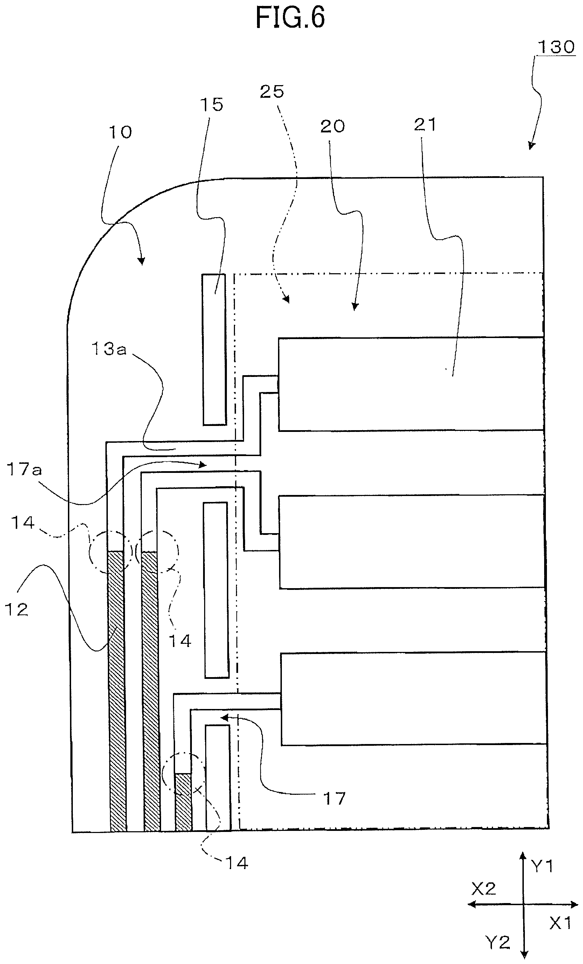

Next, referring to Fig. 4 through Fig. 6, an input device 110 according to a first modified example of the first embodiment, an input device 120 according to a second modified example, an input device 130 according to a third modified example will be described. Fig. 4 is a plan view illustrating the input device 110 according to the first modified example. Fig. 5 is an enlarged plan view illustrating the input device 120 according to the second modified example. Fig. 6 is an enlarged plan view illustrating the input device 130 according to the third modified example.

The difference between the input device 100 according to the first embodiment and the input device 110 according to the first modified example exists in: the manners in which the transparent connection wiring units 13a are arranged; the lengths of the level parts 15; the widths of the gaps 17; the numbers of the level parts 15; and the numbers of the gaps 17, due to the difference in the arrangement manners. Further, the difference between the input device 100 and the input device 120 according to the second modified example exists only in the shapes of the transparent connection wiring units 13a. Further, the input device 130 according to the third modified example is obtained by combining the input device 110 according to the first modified example and the input device 120 according to the second modified example.

Other than the above-described differences from the input device 100 according to the first embodiment, the structures of the input device 110 according to the first modified example, the input device 120 according to the second modified example, and the input device 130 according to the third modified example are the same as the structure of the input device 100 according to the first embodiment. Therefore, the descriptions of the same parts will be omitted. Further, the numerical code given to each part is the same as in the input device 100 according to the first embodiment. It should be noted that, in the input device 110 and the input device 130, the width of the gaps 17 is different from the width of the gaps 17 in the input device 100. The gaps 17 in the input device 110 and the input device 130 are referred to as "wider gaps 17a". Further, in the input device 120 and the input device 130, the numerical code for the connection points between the metal wiring units 12 and the transparent connection wiring units 13a is newly referred to as "connection points 14".

### <First modified example>

As illustrated in Fig. 4, in the input device 110 according to the first modified example, the number of the level parts 15 located on the back left side is two, and the length of the level parts 15 is longer than that in the input device 100. Further, the width of the gap 17 between the two level parts 15 is wider than that in the input device 100, and the wider gap 17 is referred to as a "wider gap 17a". Further, two transparent connection wiring units 13a formed in the decorative area 10 extend through the wider gap 17a.

In other words, the transparent wiring units 13 are arranged in such a way that multiple transparent connection wiring units 13a extend from the display area 20 to the decorative area 10 through a common gap 17 (that is, the wider gap 17a). In the input device 110, the above-described arrangement of the transparent wiring units 13 is provided at a position in each of the back left side and the front right side. The above-described arrangement of the transparent wiring units 13 may be provided at a plurality of positions in each of the back left side and the front right side according to the number of transparent wiring units 13.

### <Second modified example>

In the input device 120 according to the second modified example, as illustrated in Fig. 5, the transparent connection wiring units 13a, which extend from the display area 20 to the decorative area 10, are formed by extending and turning to the corresponding level part 15 side (Y1 direction) after extending through the gap 17. Further, the connection points 14, at which the metal wiring units 12 and the transparent connection wiring units 13a are connected, are provided in the vicinity of the level parts 15.

In other words, the connection points 14 between the transparent connection wiring units 13a and the metal wiring units 12 in the decorative area 10 are provided at positions that face the level parts 15. In Fig. 5, the connection points 14 are provided at two positions on the back left side of the input device 120. The connection points 14 may be provided at other positions such as on the right side of the input device 120.

### <Third modified example>

In the input device 130 according to a third modified example, as illustrated in Fig. 6, the width of the gap 17, which is located between the two level parts 15 on the back left side, is caused to be longer, and the longer gap 17 is referred to as a wider gap 17a. Two transparent connection wiring units 13a, which are formed in the decorative area 10, extend through the wider gap 17a. Further, the transparent connection wiring units 13a, which extend from the display area 20 to the decorative area 10, are formed by extending and turning to a direction of the level part 15 that is on the front side (Y2 direction) after extending through the gap 17. Further, the connection points 14 between the metal wiring units 12 and the transparent connection wiring units 13a are provided in the vicinity of the level parts 15.

In other words, not only the transparent wiring units 13 are arranged in such a way that multiple transparent connection wiring units 13a extend from the display area 20 to the decorative area 10 through a common gap 17 (that is, the wider gap 17a), but also the connection points 14 between the transparent connection wiring units 13a and the metal wiring units 12 in the decorative area 10 are provided at positions that face the level parts 15.

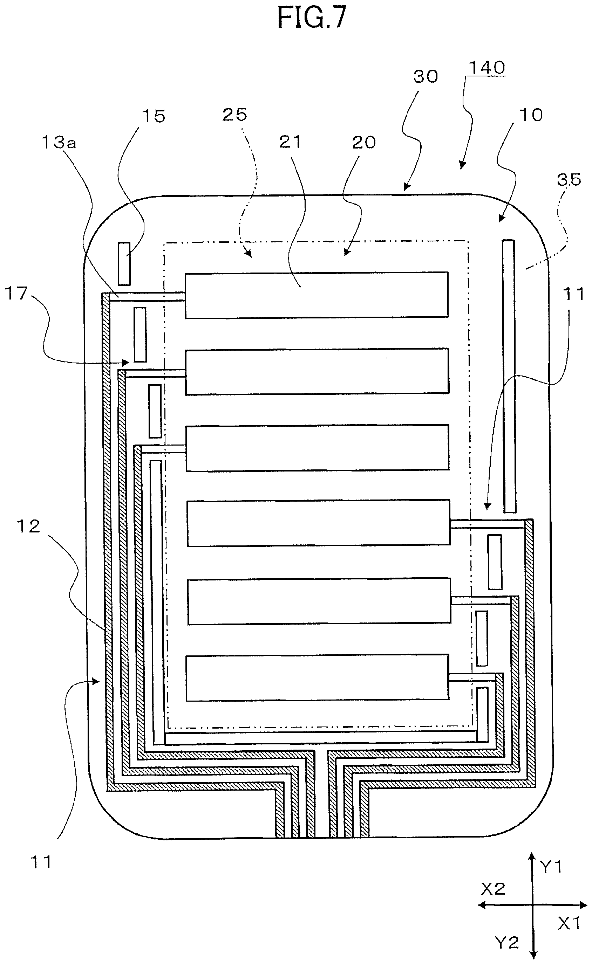

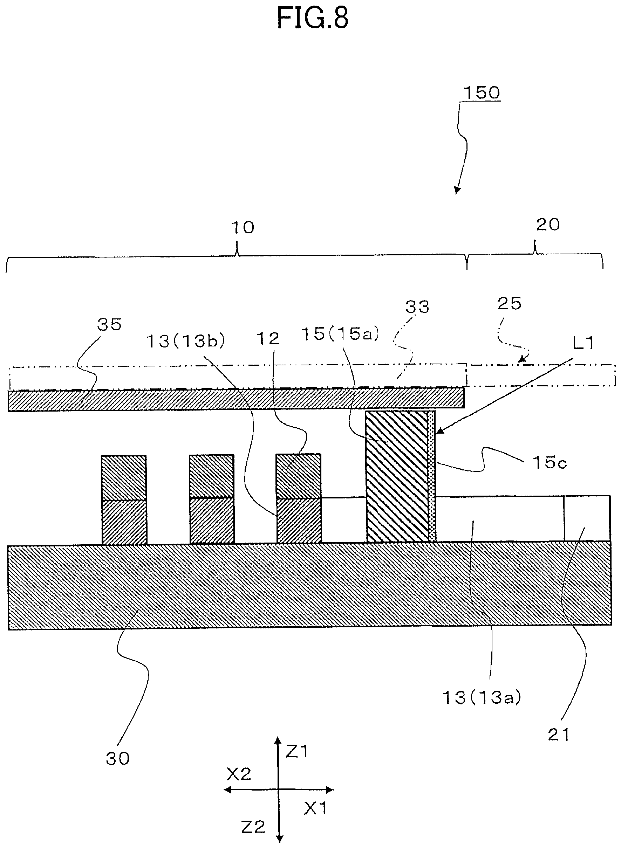

Next, referring to Fig. 7 and Fig. 8, an input device 140 according to a fourth modified example of the first embodiment and an input device 150 according to a fifth modified example will be described. Fig. 7 is a plan view illustrating the input device 140 according to the fourth modified example, and Fig. 8 is an enlarged sectional view of the input device 150 according to the fifth modified example.

The difference between the input device 100 according to the first embodiment and the input device 140 according to the fourth modified example exists only in the arrangements of the plurality of the level parts 15. Further, the difference between the input device 100 according to the first embodiment and the input device 150 according to the fifth modified example exists only in the structures of the level parts 15. Therefore, descriptions related to other than the above differences will be omitted. Further, the numerical code given to each part is the same as in the input device 100 according to the first embodiment.

### <Fourth modified example>

In the input device 140 according to the fourth modified example of the first embodiment, as illustrated in Fig. 7, the positions of the plurality of the level parts 15 located on the back left side are shifted in a direction towards the left side of the transparent substrate 30 that has substantially a rectangular shape and the positions of the plurality of the level parts 15 located on the back right side are shifted in a direction towards the right side of the transparent substrate 30. According to the above arrangement, the positions of the plurality of the level parts 15 are arranged not along the Y1-Y2 direction. In other words, in the input device 100, it is not necessary for the positions of the plurality of the level parts 15 to be arranged along the Y1-Y2 direction.

### <Fifth modified example>

In the input device 150 according to the fifth modified example of the first embodiment, as illustrated in Fig. 8, a light shielding layer 15c is provided on the right side surface of a protrusion 15a, which is the level part 15 provided in the decorative area 10, (that is, the light shielding layer 15c is provided on the display area 20 side surface of the protrusion 15a). The light shielding layer 15c is formed by painting black the right side surface of the protrusion 15a made of a transparent substrate. It should be noted that the light shielding layer 15c may be formed, not by painting black the right side surface of the protrusion 15a, but by applying a satin-like finish to the side surface of the protrusion 15a.

In the case where the light shielding layer 15c is provided on the level parts 15 included in the decorative area 10, the light beam L1, traveling towards the metal wiring units 12 illustrated in Fig.8, hits the light shielding layer 15c on the display area 20 side surface of the protrusion 15a first, and then the light beam L1 is reflected by the light shielding layer 15c towards the display area 20 side. Therefore, it becomes possible to prevent the light beam L1 traveling towards the metal wiring units 12 from readily hitting the metal wiring units 12. As a result, it is possible to prevent the metal wiring units 12 from being readily seen from the operation surface 25 side of the input device 150. It should be noted that the light beam L1 is irregularly reflected by the light shielding layer 15c in the case where the light shielding layer 15c is formed by applying a satin-like finish to the side surface of the protrusion 15a. In this case, it is possible to prevent the light beam L1 from readily hitting the metal wiring units 12.

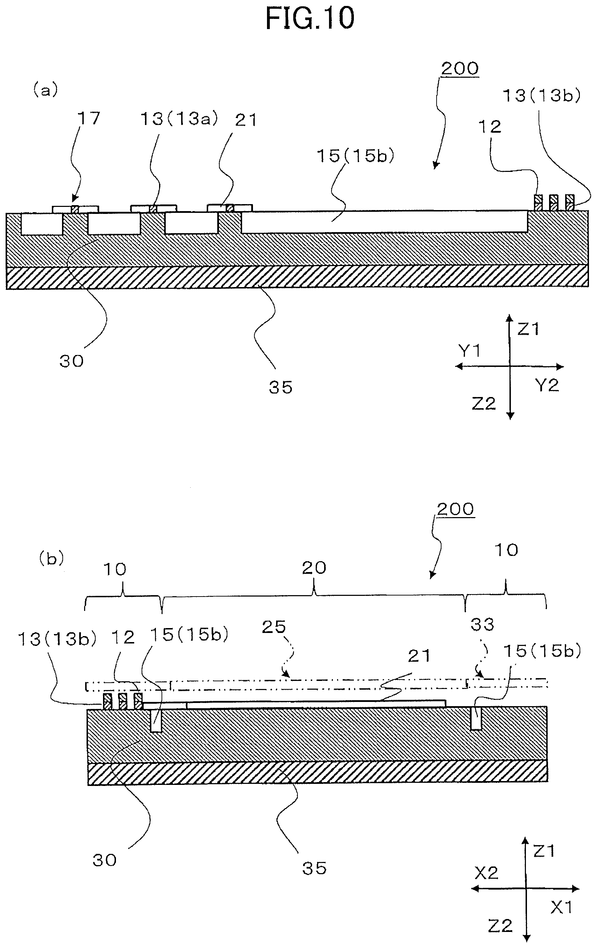

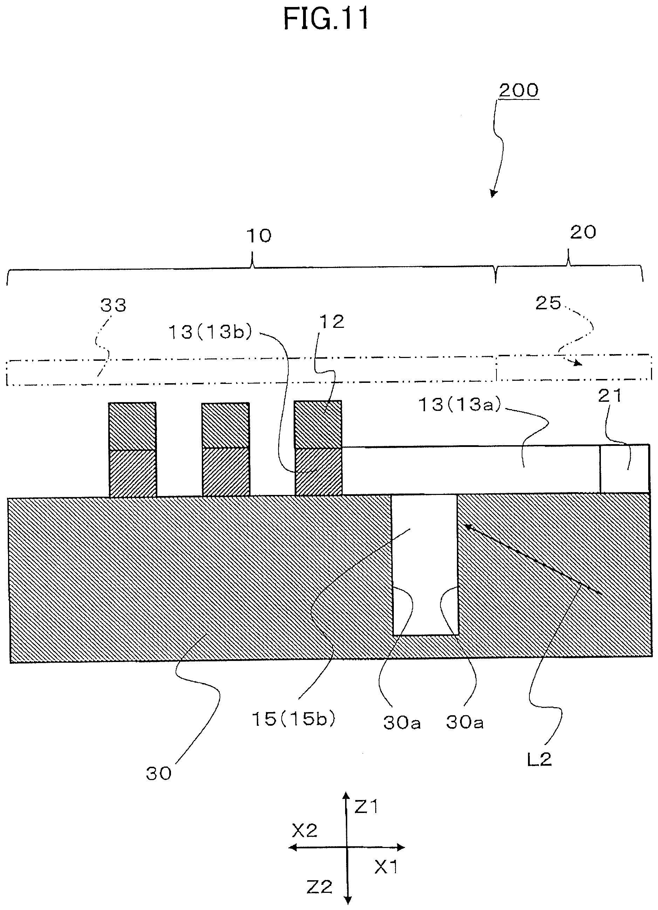

Next, referring to Fig. 9 through Fig. 11, a structure of an input device 200 according to an example which does not form part of the present invention will be described. Fig. 9 is a plan view illustrating the input device 200, and Fig. 10 is a sectional view of the input device 200. In Fig. 10, Fig. 10(a) is a sectional view viewed from a C-C line illustrated in Fig. 9 towards the right direction, and Fig. 10(b) is a sectional view viewed from a D-D line illustrated in Fig. 9 towards the back direction. Further, Fig. 11 is an enlarged sectional view of a part of the input device 200 viewed from the D-D line illustrated in Fig. 9 towards the back direction.

The difference between the input device 100 according to the first embodiment and the input device 200 according to the example exists only in the structures of the level parts 15. Therefore, descriptions related to other than the level parts 15 will be omitted. Further, the numerical code given to each part is the same as in the input device 100 according to the first embodiment.

As illustrated in Fig. 9, similar to the input device 100, the input device 200 includes: a transparent substrate 30 including a display area 20 and a decorative area 10 on the surface; transparent electrodes 21 included in the display area 20; and a wiring unit 11 included in the decorative area 10.

As illustrated in Fig. 9, a plurality of level parts 15 are provided in the decorative area 10 on the display area 20 side with respect to the metal wiring units 12.

As illustrated in Fig. 9, the level parts 15 are formed in a direction from the front side to the back side (Y1-Y2 direction). Gaps 17 are provided between the adjacent level parts 15. Therefore, the level parts 15 are separated from each other. In other words, the level parts 15 are provided in a direction in which the metal wiring units 12 extend in a plan view so as to create gaps 17 between the adjacent level parts 15. Further, the above-described transparent connection units 13a extend from the display area 20 to the decorative area 10 through the gaps 17.

In the input device 200 the level parts 15 provided in the decorative area 10 are recesses 15b provided in the transparent substrate 30 as illustrated in Fig. 10(a), Fig. 10(b), and Fig. 11. Therefore, the level parts 15 are spaces, in which the substrate does not exist, formed together with the transparent substrate 30.

In the input device 200, by providing the level parts 15, which are recesses 15b, in the decorative area 10 on the display area 20 side with respect to the metal wiring units 12, it is possible to prevent the metal wiring units 12 from being readily seen from the operation surface 25 side of the input device 200.

Other than the light beam traveling above the transparent substrate 30, the light beam traveling towards the metal wiring units 12 includes, as illustrated in Fig. 11, a light beam L2 that travels through the inside of the transparent substrate 30 that is formed by a film-shaped transparent substrate made of polyethylene terephthalate, etc., with transparency, or by a glass substrate.

The light beam L2, which has traveled through the inside of the transparent substrate 30 illustrated in Fig. 11 and which is traveling towards the metal wiring units 12, reaches one of side walls 30a that serves as a boundary between the transparent substrate 30 and the recesses 15b on its way to the metal wiring units 12, and then enters the space of the recess 15b. When entering the recess 15b, the light beam L2 is refracted because of the fact that the refractive index of the air in the recess 15b is less than the refractive index of the transparent substrate 30. Further, when hitting the other of the side walls 30a from the recess 15b, the light beam L2 is also refracted because of the fact that the refractive index of the transparent substrate 30 is greater than the refractive index of the air in the recess 15b. Therefore, the light beam L2 will not readily hit the metal wiring units 12. As a result, it is possible to prevent the metal wiring units 12 from being readily seen from the operation surface 25 side of the input device 100.

The level parts 15 are provided on the display area 20 side with respect to the metal wiring units 12. As a result, it is possible to cause the light beam L1 traveling towards the metal wiring units 12 to be refracted by the level parts 15, and it is possible to prevent the light beam L1 from readily hitting the metal wiring units 12. Therefore, it is possible to prevent the metal wiring units 12 from being readily seen from the operation surface 25 side.

Further, the light beam L1 traveling above the transparent substrate 30 towards the metal wiring units 12 is refracted by the protrusions 15a provided on the transparent substrate 30. As a result, it is possible to prevent the light beam L1 from readily hitting the metal wiring unit.

Further, it is possible to reduce the number of the gaps 17 by having one of the gaps 17 shared by a plurality of the transparent connection wiring units 13a. Therefore, it is possible to further prevent the metal wiring units 12 from being readily seen from the operation surface 25 side.

Further, the connection points 14 between the transparent connection wiring units 13a and the metal wiring units 12 are provided at positions avoiding the gaps 17, and thus, the action of the level parts 15 for refracting the light beam L1 can be further strengthened.

Further, it is possible to cause the light beam L1 traveling towards the metal wiring units 12 to be reflected by the light shielding layer 15c, and thus, it is possible to reduce the amount of the light beam L1 that is emitted onto the metal wiring units 12.

Further, in the input device 200, the light beam L2 traveling through the transparent substrate 30 towards the metal wiring units 12 is refracted by the recesses 15b provided in the transparent substrate 30. As a result, it is possible to reduce the amount of the light beam L2 that is emitted onto the metal wiring units 12.

As described above, in the input device according to an embodiment of the present invention, the level parts are provided on the display area side with respect to the metal wiring units. As a result, it is possible to cause the light beam traveling towards the metal wiring units to be refracted by the level parts, and it is possible to prevent the light beam from being readily emitted onto the metal wiring units. Therefore, it is possible to prevent the metal wiring units from being readily seen from the operation surface side.

An embodiment of the present invention is not limited to the above-described embodiments. Various modifications may be possible without departing from the subject matter of the present invention. For example, the input devices 110 through 150 are described as modified examples of the input device 100 according to the first embodiment.

### [DESCRIPTION OF THE REFERENCE NUMERALS]

- 10: decorative area
- 11: wiring unit
- 12: metal wiring unit
- 13: transparent wiring unit
- 13a: transparent connection wiring unit
- 13b: transparent lower-side wiring unit
- 14: connection point
- 15: uneven part
- 15a: protrusion
- 15b: recess
- 15c: light shielding layer
- 17: gap
- 17a: wider gap
- 20: display area
- 21: transparent electrode
- 25: operation surface
- 30: transparent substrate
- 30a: side wall
- 33: surface member
- 35: decorative layer
- 100: input device
- 110: input device
- 120: input device
- 130: input device
- 140: input device
- 150: input device
- 200: input device
- L1: light beam
- L2: light beam

## Claims

1. An input device (100) comprising:
a transparent substrate (30) with a display area (20) and a decorative area (10);
***a surface member (33) that is provided above the transparent substrate (30), the surface member* (33) *including an operation surface (25);***
transparent electrodes (21) that are provided in the display area (20) on a side opposite to the operation surface (25);
a decorative layer (35) that is provided in the decorative area (10); and
a wiring unit (11) that is provided on ***the decorative area (10) of*** the transparent substrate ***(30)***, the wiring unit (11) ***facing*** the decorative layer (35), the wiring unit (11) including metal wiring units (12) and transparent units (13),
**characterised in that**
the wiring unit (11) has a layered structure in which the metal wiring units (12) and the transparent wiring units (13) are layered, the transparent wiring units (13) being a transparent conductive layer integrally formed with the transparent electrodes (21),
the transparent wiring units (13) include transparent connection wiring units (13a) that extend into both the display area (20) and the decorative area (10) to connect the transparent electrodes (21) electrically with the metal wiring units (12),
a plurality of level parts (15) are provided in the decorative area (10) ***between the metal wiring units (12) and the display area*** (20), wherein gaps (17) are provided between adjacent level parts (15), wherein the plurality of the level parts (15) are provided in a direction in which the metal wiring units (12) extend in a plan view, the plurality of level parts (15) are formed as protrusions molded together with the transparent substrate (30), and
the transparent connection wiring units (13) extend from the display area (20) to the decorative area (10) through the gaps (17).

2. The input device according to claim 1, wherein a plurality of the transparent connection wiring units (13) extend from the display area (20) to the decorative area (10) through a common gap (17a).

3. The input device according to any one of claims 1 to 2, wherein connection points between the transparent connection wiring units (13a) and the metal wiring units (12) in the decorative area (10) are provided at positions that face the level parts (15).

4. The input device according to any one of claims 1 through 3, wherein light shielding layers (15c) are provided on side surfaces of the level parts (15).

## Patentansprüche

1. Eingabevorrichtung (100), aufweisend:
ein transparentes Substrat (30) mit einem Anzeigebereich (20) und einem Dekorbereich (10);
ein Oberflächenelement (33), das über dem transparenten Substrat (30) vorgesehen ist, wobei das Oberflächenelement (33) eine Betätigungsfläche (25) beinhaltet;
transparente Elektroden (21), die in dem Anzeigebereich (20) auf einer der Betätigungsfläche (25) gegenüberliegenden Seite vorgesehen sind;
eine Dekorschicht (35), die in dem Dekorbereich (10) vorgesehen ist; und
eine Verdrahtungseinheit (11), die an dem Dekorbereich (10) des transparenten Substrats (30) vorgesehen ist, wobei die Verdrahtungseinheit (11) der Dekorschicht (35) zugewandt ist, wobei die Verdrahtungseinheit (11) Metallverdrahtungseinheiten (12) und transparente Einheiten (13) aufweist,
**dadurch gekennzeichnet,**
**dass** die Verdrahtungseinheit (11) eine Schichtstruktur aufweist, bei der die Metallverdrahtungseinheiten (12) und die transparenten Verdrahtungseinheiten (13) in Schichten vorliegen, wobei es sich bei den transparenten Verdrahtungseinheiten (13) um eine transparente leitfähige Schicht handelt, die einstückig mit den transparenten Elektroden (12) ausgebildet ist,
**dass** die transparenten Verdrahtungseinheiten (13) transparente Verbindungsverdrahtungseinheiten (13a) beinhalten, die sich sowohl in den Anzeigebereich (20) als auch in den Dekorbereich (10) erstrecken, um die transparenten Elektroden (21) mit den Metallverdrahtungseinheiten (12) elektrisch zu verbinden,
**dass** eine Mehrzahl von Niveaubereichen (15) in dem Dekorbereich (10) zwischen den Metallverdrahtungseinheiten (12) und dem Anzeigebereich (20) vorgesehen sind, wobei zwischen benachbarten Niveaubereichen (15) Lücken (17) vorhanden sind, wobei die Mehrzahl von Niveaubereichen (15) in einer Richtung vorgesehen sind, in der sich die Metallverdrahtungseinheiten (12) in der Draufsicht erstrecken,
**dass** die Mehrzahl von Niveaubereichen (15) als Erhebungen ausgebildet sind, die zusammen mit dem transparenten Substrat (30) durch Formen gebildet sind, und
**dass** sich die transparenten Verbindungsverdrahtungseinheiten (13) von dem Anzeigebereich (20) durch die Lücken (17) zu dem Dekorbereich (10) erstrecken.

2. Eingabevorrichtung nach Anspruch 1,
wobei sich eine Mehrzahl der transparenten Verbindungsverdrahtungseinheiten (13) durch eine gemeinsame Lücke (17a) von dem Anzeigebereich (20) zu dem Dekorbereich (10) erstrecken.

3. Eingabevorrichtung nach einem der Ansprüche 1 bis 2,
wobei Verbindungspunkte zwischen den transparenten Verbindungsverdrahtungseinheiten (13a) und den Metallverdrahtungseinheiten (12) in dem Dekorbereich (10) an Positionen vorgesehen sind, die den Niveaubereichen (15) zugewandt gegenüberliegen.

4. Eingabevorrichtung nach einem der Ansprüche 1 bis 3,
wobei Lichtabschirmschichten (15c) an Seitenflächen der Niveaubereiche (15) vorgesehen sind.

## Revendications

1. Dispositif d'entrée (100), comprenant :
un substrat transparent (30) doté d'une zone d'affichage (20) et d'une zone décorative (10) ;
un élément de surface (33), lequel est prévu au-dessus du substrat transparent (30), l'élément de surface (33) incluant une surface de fonctionnement (25) ;
des électrodes transparentes (21), lesquelles sont prévues dans la zone d'affichage (20) sur un côté face à la surface de fonctionnement (25) ;
une couche décorative (35), laquelle est prévue dans la zone décorative (10), et
une unité de câblage (11), laquelle est prévue sur la couche décorative (10) du substrat transparent (30), l'unité de câblage (11) faisant face à la couche décorative (35), l'unité de câblage (11) incluant des unités de câblage métalliques (12) et des unités transparentes (13),
**caractérisé en ce que**
l'unité de câblage (11) présente une structure en couches, où les unités de câblage métalliques (12) et les unités de câblage transparentes (13) sont superposées, les unités de câblage transparentes (13) étant une couche conductrice transparente formée d'un seul tenant avec les électrodes transparentes (21) ;
les unités de câblage transparentes (13) incluent des unités de câblage de connexion transparentes (13a), lesquelles s'étendent à la fois jusque dans la zone d'affichage (20) et la zone décorative (10) afin de connecter les électrodes transparentes (21) par voie électrique avec les unités de câblage métalliques (12) ;
une pluralité de parties de niveau (15) sont prévues dans la zone décorative (10) entre les unités de câblage métalliques (12) et la zone d'affichage (20), dans lequel des espaces (17) sont prévus entre des parties de niveau adjacentes (15) ; dans lequel la pluralité de parties de niveau (15) sont prévues dans une direction où les unités de câblage métalliques (12) s'étendent suivant une vue de dessus ;
la pluralité de parties de niveau (15) sont formées comme des saillies moulées conjointement avec le substrat transparent (30), et
les unités de câblage de connexion transparentes (13) s'étendent de la zone d'affichage (20) vers la zone décorative (10) à travers les espaces (17).

2. Dispositif d'entrée selon la revendication 1, dans lequel une pluralité des unités de câblage de connexion transparentes (13) s'étendent de la zone d'affichage (20) à la zone décorative (10) à travers un espace commun (17a).

3. Dispositif d'entrée selon l'une quelconque des revendications 1 à 2, dans lequel des points de connexion entre les unités de câblage de connexion transparentes (13a) et les unités de câblage métalliques (12) dans la zone décorative (10) sont prévus en des positions faisant face aux parties de niveau (15).

4. Dispositif d'entrée selon l'une quelconque des revendications 1 à 3, dans lequel des couches faisant écran à la lumière (15c) sont prévues sur des surfaces latérales des parties de niveau (15).
